# EUROPEAN PATENT SPECIFICATION

(11) **EP 3 448 723 B1**
(45) Date of publication and mention of the grant of the patent: **29.06.2022**
(21) Application number: 16900326.6
(22) Date of filing: 26.04.2016
(51) Int. Cl.: B60R 16/02, B60R 21/015, B60J 1/08, B60N 2/00, B60R 11/00, B60R 11/02, B60R 16/037, B60J 3/04, B60K 35/00, B60K 37/06

(54) **HUMAN-MACHINE INTERFACE APPARATUS FOR A VEHICLE**
MENSCH-MASCHINE-SCHNITTSTELLENVORRICHTUNG FÜR EIN FAHRZEUG
APPAREIL D'INTERFACE HOMME-MACHINE POUR UN VÉHICULE

(43) Date of publication of application: 06.03.2019
(73) Proprietor: Continental Automotive GmbH, 30165 Hannover (DE)
(72) Inventor: LEE, Fook Wai, Singapore 643683 (SG); LEE, Chee Wei, Singapore 560155 (SG)
(74) Representative: Continental Corporation
(86) International application number: PCT/IB2016/052348
(87) International publication number: WO 2017/187224

(56) References cited:
- WO-A1-03/082621
- DE-A1- 19 852 873
- DE-B3- 10 317 901
- JP-A- S60 158 303
- KR-A- 20060 072 268
- KR-B1- 101 396 235
- KR-B1- 101 442 641
- US-A1- 2014 320 946
- US-A1- 2015 239 398
- US-B2- 7 373 249

## Description

The present application relates to a human-machine interface apparatus. In particular, the application relates to a controller of a human-machine interface apparatus for a vehicle, a human-machine interface apparatus a vehicle and a method for operating the human-machine interface apparatus for a vehicle.

In the prior art, adjustable human machine interfaces are known.

US 2005/0057351 A1 describes a combined instrument display device for installation in a motor vehicle, and a drive device with which the position of the display device relative to the vehicle can be modified so as to allow for glare-free reading.

DE 198 52 873 A1 and JP S60 158303 A describe an optical device for a vehicle with the features of the preamble of claim 1.

WO 03/082621 A1 describes an instrument cluster that comprises display devices for installation in a motor vehicle, and a drive device with which the position of the display devices relative the vehicle can be modified so as to allow for glare-free reading. The position of the display devices is modified automatically by an installed electronic circuit that controls the drive device subject to defined parameters. Said parameters may be measuring values of light sensors and/or motion sensors mounted on the vehicle and/or values that are determined by an evaluation unit using a database.

DE 103 17 901 B3 describes a central control console which incorporates switch elements and information and entertainment displays and extends from the automobile dashboard to fit between the front passenger seats, the entire control console adjustable in the direction of the automobile longitudinal axis via an electric and/or hydraulic positioning drive, e.g. by movement along a guide rail or guide rod.

US 2014/320946 describes a method, system or computer usable program product for dynamically changing transparency of portions of a vehicle transparent material including determining a location of a bright light with respect to a vehicle; determining a driver location within the vehicle; selectively changing a transparency of a selected portion of the vehicle transparent material to obscure the bright light from the driver's eyes, while allowing a majority of the vehicle transparent material to remain normally transparent; and repeating the above steps continually to adjust a location of the selected portion of the vehicle transparent material as the vehicle changes orientation with respect to the bright light.

It is an object of this application to provide an improved human machine interface apparatus according to claim 4.

The application provides an improved human-machine interface (HMI) apparatus for a vehicle, the human-machine interface apparatus comprises a person position sensor for providing a current person position information. The person position sensor can be a camera which is configured to capture the vehicle cabin interior for determining positions of persons in the vehicle. The person position information can comprise information on face position of one or more persons in the cabin of the vehicle. Alternatively, the person position information can comprise information on position and orientation of the heads of the persons in the cabin of the vehicle.

Position and orientation in this context means position and orientation relative to a coordinate system associated with the vehicle - the reference coordinate system. The human-machine interface apparatus further comprises at least one human-machine interface device for visual perception.

The human-machine interface apparatus comprises an ambient light sensor for providing a current ambient light information and the controller can be further configured to send the positioning control signal for adjusting the position of the at least one human-machine interface device in accordance with the current person position information and in accordance with the current ambient light information.

According to the invention, the current ambient light information is taken into account for the adjustment of the at least one human-machine interface device only in the case of strong ambient light, i.e. when the intensity or the illuminance of the ambient light on a sensor exceeds a certain threshold value, in particular illuminance value of 10 Ix.

By defining a threshold of strong ambient light, irritations caused by unnecessary readjustments of the human-machine interface device because of changes in intensity of a weak ambient light can be avoided.

In particular, the at least one human-machine interface device can be a human-machine interface device for providing visual information to the users, in particular to the driver and/or to the passengers.

The at least one human-machine interface device can comprise both primary and secondary human-machine interface devices, including primary displays, side- or rear mirrors of the vehicle, as well as any secondary display.

The primary displays can comprise any display for displaying essential driver-relevant information, such as a head-up display or a driver instrument cluster display. The secondary display can for instance comprise a navigator display or a center information display (CID), for displaying information of more general interest.

The human-machine interface apparatus comprises a positioning device for positioning the at least one human-machine interface device.

The positioning device can comprise a positioning mechanism and an actuator. The positioning device can be configured for adjusting the position of the at least one human-machine interface device relative to the reference coordinate system.

The human-machine interface apparatus further comprises a controller configured to send a positioning device control signal to the positioning device for adjusting the position of the at least one human-machine interface device in accordance with the current person position information for improving the visual perception of the at least one human-machine interface device.

Thus, an intelligent human-machine interface apparatus is provided which can automatically adapt the position of human-machine interface devices in accordance with the current head or face position of the user resulting in an improved visual perception of the human-machine interface device by the persons in the vehicle.

By improved perception of the human-machine interface devices, especially of the primary displays and mirrors, the driver gets a better overview over the vehicle surrounding and over operating parameters of the vehicle. Due to the better overview of the driver, the traffic safety is increased as well.

The at least one human-machine interface device can comprise a display, whereby the controller can be configured to send a positioning device control signal to the positioning device for reducing the user viewing angle of display.

By reducing the viewing angle the skewness of the image on the display from the user's perspective can be reduced. Besides, it can increase also the contrast of the display from the user's perspective, since many displays - in particular liquid crystal displays - show increasing contrast with reducing viewing angle.

Thus, by reducing the viewing angle towards the minimum viewing angle of 0° in the case of a straight view, corresponding to a viewing direction which is perpendicular to the display plane, the readability of the display can be improved.

The at least one human-machine interface device can be a display with a specific pre-known contrast-viewing angle dependence and the controller can be configured to send a positioning device control signal to the positioning device for adjusting the position of the display device in accordance with the person position information and in accordance with the contrast-viewing angle information, to increase the contrast of the display from the user's perspective.

By increasing the contrast, the readability of the display as well as the user comfort can be increased.

In the case of primary displays, increased readability of displays can also lead to increased traffic safety.

The current ambient light information can in particular comprise an intensity and direction of the current ambient light relative to the vehicle. By taking into account the direction of the current ambient light - e.g. direction of the sun relative to the reference coordinates - the human-machine interface device can be positioned in such way that dazzling of the user by the ambient light is avoided.

The light sensor can comprise a four quadrant sensor for determining the current ambient light direction.

The ambient light sensor can comprise a sunload sensor for providing a current sunload information, including current sunload direction or sun light direction relative to the reference coordinate system.

The current sunload direction can be also determined based on current vehicle positioning data such as GPS (global positioning system) data, current accelerometer data, current gyro-sensor data, and/or ephemeris data.

The human-machine interface apparatus can comprise a smart glass window device and the controller can be configured to send a smart glass window control signal to the smart glass window device for adjusting light transmittance, in particular light transmittance in visible and/or infrared spectral range, of the smart glass window of the vehicle.

By reducing the light transmittance of the smart glass window, the dazzling of the user by the ambient light can be reduced.

By reducing the light transmittance in the infrared spectral range, the comfort for the persons can be increased, by reducing the thermal impact of the sun light.

The human-machine interface apparatus can comprise a user identification device for providing user identification information, and the controller can be configured to identify the user, to retrieve pre-stored user profile information from a data storage device, and to send a control signal to the positioning device for positioning the human-machine interface device in accordance with the preferences of the identified user.

The data storage device may comprise both internal data storage device, provided as a part of the controller, or an external data storage device.

The positioning of the human-machine interface device in accordance with the preferences of the identified user leads to increased comfort and increased traffic safety.

The user identification device can be a driver identification device, comprising a receiver configured to receive a unique car key identification information from a sender which is installed in the wireless key of the vehicle, in particular, when the sender is activated when the driver uses his wireless key to unlock the vehicle.

The user identification device can further comprise a face recognizing system, which can be provided as a separate device or integrated in the person position sensor.

The human-machine interface apparatus can comprise a user action detector for providing information about user commands and the controller can be configured to send control signals to the positioning device for positioning the human-machine interface in accordance with the user commands.

The user action detector can comprise a haptic input interface, in particular comprising one or more input buttons for inputting user commands.

Due to the user action detector, the user can change the positions of the human-machine interface devices. The changed positions can be stored in the data storage device for later retrieval and for adjusting the human-machine interface apparatus according to the stored positions.

According to another aspect of the present application, a controller of a human-machine interface apparatus for a vehicle is provided. The controller comprises the features of claim 1.

In particular, the processing unit can be configured to determine a modified target position of the human-machine interface device in accordance with the current person position information and to generate the positioning device control signal according to the modified target position.

The controller allows an automatic adjustment of the position of human-machine interface devices in accordance with the current head or face position of the user resulting in an improved visual perception of the human-machine interface devices by the persons in the vehicle.

By improved perception of the human-machine interface devices, especially of the primary displays and mirrors, the driver gets a better overview over the vehicle surrounding and over operating parameters of the vehicle. Due to the better overview of the driver, the traffic safety is increased as well.

Due to the position adjustment of the human-machine interface device in accordance with the person position information, the visual perception of the human-machine interface device can be improved. In particular, in the case of a display as a human-machine interface device the readability of the display can be increased.

The processing unit can be configured to generate a smart glass window control signal for adjusting light transmittance of a smart glass window and the controller can comprise a smart glass window interface for sending out the smart glass window control signal to the smart glass window device for adjusting, in particular for reducing or increasing, the light transmittance of the smart glass window in accordance with the current ambient light information.

In the case of a strong ambient light presence, dazzling of the persons in the vehicle by the ambient light can be reduced by reducing the transmittance of the smart glass window, which can be a front window, side window, and/or back window of the vehicle.

The controller can comprise a user identification device interface for receiving user identification information and the processing unit can be configured to generate the positioning device control signal for positioning the human-machine interface device in accordance with the preferences of the identified user.

The controller can further comprise a user action detector interface, in particular a haptic input interface, for providing information about user commands. The processing unit can be configured to generate send control signals to the positioning device for positioning the human-machine interface device in accordance with the user commands.

By means of the user action detector, the user can change the position settings of the human-machine interface devices by his or her commands. The changed settings can be stored in the data storage device for later retrieval and for application on the human-machine interface apparatus.

According to another aspect of the application, a method for operating a human-machine interface apparatus for a vehicle is provided. The method comprises the features of claim 9.

The method allows an automatic adjustment of the position of human-machine interface devices in accordance with the current head or face position of the user resulting in an improved visual perception of the human-machine interface devices by the persons in the vehicle.

By improved perception of the human-machine interface devices, especially of the primary displays and mirrors, the driver gets a better overview over the vehicle surrounding and over operating parameters of the vehicle. Due to the better overview of the driver, the traffic safety is increased as well.

In the case of conflict or contradiction between the adjustment of a human-machine interface direction in accordance with the person presence information, on the one hand, and in accordance with the ambient light direction, on the other hand, the adjustment according to the person position information, in particular that of the driver of the vehicle, is decisive.

In such a case the adjustment according to the ambient light direction can be suppressed or reduces to a slight correction of the position, just enough to avert the strong ambient light reflection from the face of the user, in particular from the face of the driver.

The method can comprise adjusting a transmittance of a smart glass window in accordance with the current ambient light information.

By reducing the light transmittance of the smart glass window, the dazzling of the user by the ambient light can be reduced.

The method can also comprise:
- identifying user based on a user identification information received from a user identification device;
- retrieving pre-stored personalized user profile information of the identified user,
- adjusting the human-machine interface device position in accordance with the personalized user profile information.

The positioning of the human-machine interface device in accordance with the preferences of the identified user leads to increased comfort and increased traffic safety.

The user identification information can be provided by a face recognition system, in particular, an optical face recognition system, which can be provided as a separate device or integrated in the person position sensor.

The execution of the method can be triggered upon vehicle start, in particular upon start of an electric motor of an electric vehicle or upon detection of an ignition voltage of a vehicle with an internal combustion engine.

According to a still another aspect, a vehicle is provided which comprises a human-machine interface apparatus according to the first aspect of the application.

Due to the intelligent human-machine interface apparatus, the vehicle is characterised by increased comfort and traffic safety.

The vehicle can be configured as a vehicle with autonomous driving capability.

In a vehicle with autonomous driving capability, the automatic adjustment of human-machine interface devices, including both primary and secondary human-machine interface devices, would not jeopardize the traffic safety.

The vehicle can comprise the human-machine interface according to the first aspect of the application only for automatic position adjustment of secondary human-machine interface devices and not for primary displays.

Thus the driver of the vehicle would not be disturbed or irritated by automatic adjustment of primary human-machine interface devices which display current driver relevant information.

Due to the intelligent way of automatic adjustment of the human-machine interface device position both the traffic safety and the comfort for the persons in the vehicle can be increased.

The exemplary embodiments will hereinafter be described in conjunction with the following drawing figures, wherein like numerals denote like elements, and wherein:
Fig. 1 shows a block diagram of a human-machine interface apparatus for a vehicle according to an embodiment, and
Fig. 2 shows a flow chart of a method for operating a human-machine interface apparatus according to an embodiment
Fig. 3 shows a dashboard of a vehicle with several human-machine interfaces, and
Fig. 4 shows an example of a contrast-viewing angle dependence of a display.

In the following description, details are provided to de-scribe embodiments of the application. It shall be apparent to one skilled in the art, however, that the embodiments may be practiced without such details.

Some parts of the embodiment have similar parts. The similar parts may have the same names or similar part numbers. The description of one similar part also applies by reference to another similar parts, where appropriate, thereby reducing repetition of text without limiting the disclosure.

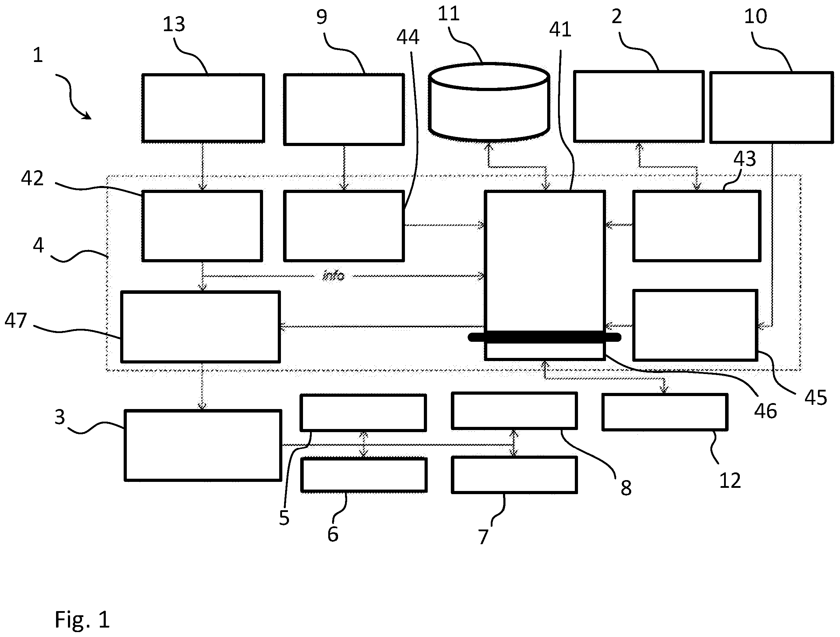

Fig. 1 shows a block diagram of a human-machine interface apparatus for a vehicle according to an embodiment.

The human-machine interface apparatus 1 for a vehicle comprises a camera 2 for capturing the persons occupying the vehicle and for providing a current person position information, a positioning device 3 for mechanical positioning of a plurality of human-machine interface devices 5, 6, 7, 8 and a controller 4, the controller 4 being operatively connected with the camera 2 and with the positioning device 3.

The plurality of human-machine interface devices comprises a head up display 5(HUD), a secondary display 6 (SD), side-view mirrors 7 and a rear-view mirror 8, the plurality of human-machine interface devices is operatively connected with the controller 4.

The human-machine interface apparatus further comprises a sun load sensor 9, which is configured to provide information about a current sun orientation with respect to the vehicle, and a driver identification device 10. The sun load sensor 10 and the driver identification device 10 are operatively connected with the controller 4.

The human-machine interface apparatus of Fig. 1 also comprises a data storage device 11 for storing personalized user information, a smart glass device 12, and a user button 13. The data storage device 11, the smart glass device 12 and the button 13 are also operatively connected with the controller 4.

The controller 4 is configured to control the positioning device 3 for adjusting the position of the human-machine interface devices 5, 6, 7, 8 in accordance with the person position information provided by the camera 2. In particular, the controller 4 is configured to send a positioning device control signal to the positioning device 3 for adjusting the position of the human-machine interface devices 5, 6, 7, 8 in accordance with the person position information.

The controller 4 comprises a processing unit 41 and a plurality of interfaces, comprising a user haptic input interface 42, a sunload sensor interface 43, a camera interface 44, user identifier input interface 45, a smart glass device interface 46 and a positioning device interface 47.

These interfaces can be provided separately or can be combined in one or several multiplex interfaces. In an embodiment, one multiplex interface can serve as an interface for the sunload sensor 9 and for the camera 2.

The haptic input interface 42 is configured to provide information about user commands to the processing unit 41 and to the positioning device interface 47 for adjusting the positions of the human-machine interface devices 5, 6, 7, 8.

The sunload sensor interface 43 is configured to provide current sunload information from the sunload sensor 9 to the processing unit 41. The sunload sensor information comprises information on GPS-, accelerometer-, gyro- and ephemeris data. The ephemeris data can be downloaded over mobile internet or generated by the GPS or internal computation.

Based on this information, characteristic of ambient light, such as light direction and/or light intensity, can be determined.

The camera interface 44 is configured to provide a current person position information from the camera 2 to the processing unit 41. The camera information comprises information on presence and location of persons - in particular, the driver and/or passengers - in the vehicle. In particular, the camera information comprises information on location and orientation of the head of the driver of the vehicle.

In an embodiment, the person position information comprises the location and orientation of heads of passengers in the vehicle.

The user identification input interface 45 is configured to provide user identification information to the processing unit 41 and the processing unit is further configured to retrieve personalized user profile information from the data storage unit 11 for adjusting the position of human-machine interface devices in accordance with the personalized user profile information.

The user identification input interface 45 is configured to provide user identification information from the user identification device 10 to the processing unit 41.

The smart glass device interface 46 is configured to send out control signals for adjusting transmittance of the smart glass window device 12.

Smart glass window device 12 comprises an electrochromic glass which changes light transmission properties in response to an applied voltage.

The smart glass window device 12 comprises a power supply, which is not shown in the figure, with controllable output voltage. The output voltage of the power supply can be adjusted in accordance with the control signals from the processing unit 41.

In an embodiment, the smart glass window device 12 comprises a polymer dispersed liquid-crystal glass, the transparency of which is modified by applying voltage from a power supply controllable by the controller 4.

Alternatively the smart glass window device 12 can comprise micro blinds, which can be aligned by means of MEMS (micro electro mechanical systems) actuator.

In a still another embodiment, the smart glass window device 12 comprises a glass nanocrystals of indium tin oxide embedded in a glassy matrix of niobium oxide, the transmitting properties can be adjusted by voltage pulses from a driver, which is controllable by the controller 4.

The processing unit 41 is configured to process input data received from the camera interface 43 and from the sunload sensor interface 44, from the button 13, and from the user identification device 10.

The processing unit 41 is further configured to execute an algorithm for determining modified target position of the human-machine interface device based on the users face coordinates with respect to the reference coordinate system as input parameters.

The processing unit 41 is further configured to generate a positioning device control signal for adjusting the position of the human-machine interface devices 5, 6, 7, 8 and to generate a smart glass window control signal for adjusting the light transmitting properties of the smart glass based on the current camera information and on the current sunload information, in order to improve readability of the human-machine interface devices.

The processing unit 41 is further configured to process the data from the user identifier interface 45, to identify the user, to retrieve the personalized user profile data of the identified user from the data storage device 11, and to generate a positioning device control signal based on the personalized user profile information retrieved from the data storage device 11.

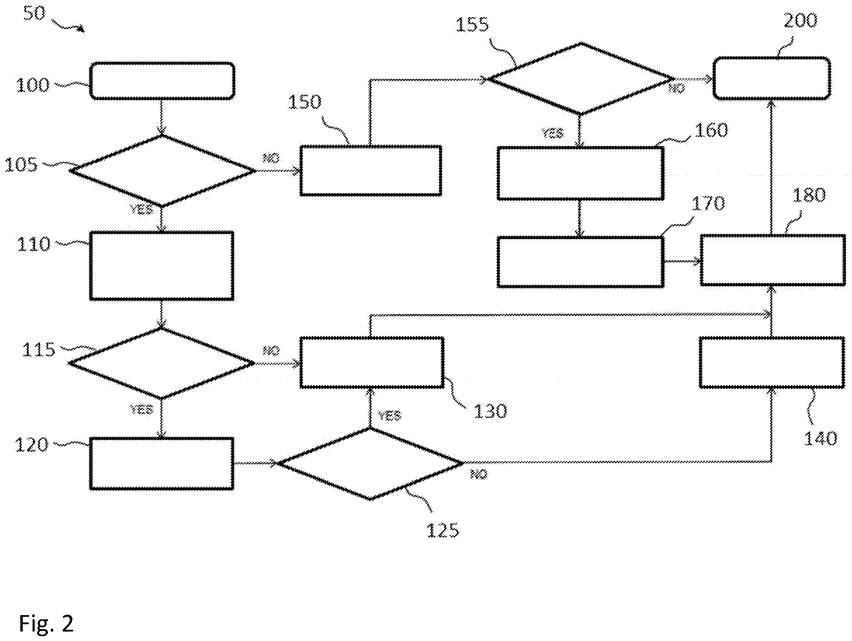

Fig. 2 shows a flow chart of a method for operating a human-machine interface apparatus of Fig. 1.

The method 50 described in Fig. 2 enables an automatic adjustment of the human-machine interface devices 5, 6, 7, 8 of the human-machine interface apparatus 1 of Fig. 1.

The automatic adjustment of the human-machine interface is triggered upon vehicle start in step 100.

Alternatively or additionally, the automatic adjustment process of the human-machine interface devices 5, 6, 7, 8 can be triggered by one or more pre-defined interrupts. The pre-defined interrupt can be an interrupt to trigger the automatic adjustment process according to the flow chart of Fig. 2 upon fulfilment of one or more user-defined conditions. A user defined condition for triggering the automatic adjustment routine can be that a current sun load exceeds a certain threshold value and/or that the change of the head position of the driver exceeds a certain pre-defined minimum displacement for a pre-defined minimum time. In an embodiment, the minimum displacement corresponds to a change of the viewing angle of 10 degrees, and the minimum time lies between 5 and 10 seconds.

Thus, user irritations caused by unnecessary readjustments of the human-machine interface device positions can be avoided.

In the step 105, it is determined, whether it is a new session or not. If it is a new session, objects in the vehicle are captured by the camera 2 in step 110. In the next step 115, a face recognition is carried out, in order to identify the persons captured by the camera 2.

In the case of person identification, in step 120 the stored preferences of the identified persons are retrieved. The preferences of the identified persons are retrieved from the data storage device 11 where personalized user profiles are stored. The personalized user profile data can also contain information whether the identified person wishes to use the human-machine interface apparatus in the automatic adaptation mode or to deactivate the automatic adaptation mode.

If in step 125, it is determined that the identified person wishes to deactivate the automatic adjustment mode, the target positions of the human-machine interface devices are modified according to pre-stored preferences of the identified person, in step 140.

If, on the other hand, in step 125 is determined that the automatic adaptation mode is not deactivated, the target position modification according to the current head position of the driver (or any relevant person in the vehicle) is modified in step 130.

Following the modification of the target position in step 130 or 140 respectively, the human-machine interface device is brought to the target position by means of the positioning device 3 in step 180.

By bringing the human-machine interface device to its target positions the adaptation process ends in step 200.

After that, the process of adaptation starts anew from the starting step 100.

If it is determined in step 105 that it is not a new session, e.g. if the vehicle was not stopped since the last session, the steps related to the face recognition are omitted and in the next step 150, the sunlight direction relative to the vehicle is checked. In an optional step 155, it is determined whether a strong i.e. disturbing reflection is present. If it is the case, the smart glass window is adjusted to reduce light transmission. In step 170, the target position of a human-machine interface device is modified for reducing disturbing reflections of the ambient light. In the next step 180 the human-machine interface devices are brought to their target positions by means of the positioning device 3.

Thus, in step 180, the human-machine interface device is brought into its target position after modification of the target position in step 130, step 140, or step 170, as the case may be.

In an embodiment, the adaptation process is restarted automatically in predefined time intervals, as long as the start-trigger condition is fulfilled.

In an embodiment, the primary human-machine interface devices, such as instrument cluster device, head-up display, rear view and side view mirrors - depending on the supplier or user preference - does not move during driving, not to jeopardize the traffic safety.

In an embodiment, the human-machine interface apparatus configured for installation in a vehicle with autonomous driving capabilities. In the autonomously driving vehicle, automatic adjustment is equally applied for both primary- and secondary human-machine interface devices.

In a specific embodiment, in presence more than two persons in the vehicle, one of them can be defined as "driver", who gets higher priority, and adjustment of the human-machine interface devices according to his or her position is decisive in case of conflict.

For secondary devices which are usually not critical for driving, e.g. secondary displays (SD) or center information displays (CID) for navigation and entertainment information, movements can be done during driving for finer adjustments to provide optimum viewing angle depending on the input information, such as driver position, other occupants position and strong ambient light direction.

In an embodiment, the human-machine interface device is a display with a specific pre-known contrast-viewing angle dependence and the controller can be configured to send a positioning device control signal to the positioning device for adjusting the position of the display device in accordance with the person position information and in accordance with the contrast-viewing angle information, to increase the contrast of the display from the user's perspective.

By increasing the contrast, the readability of the display as well as the user comfort can be increased.

In an embodiment, the user can also adjust manually the positions of human-machine interface devices, and after the manual adjustment of the human-machine interface device, the user can save the position settings in his or her personalized user profile, by means of a user input interface.

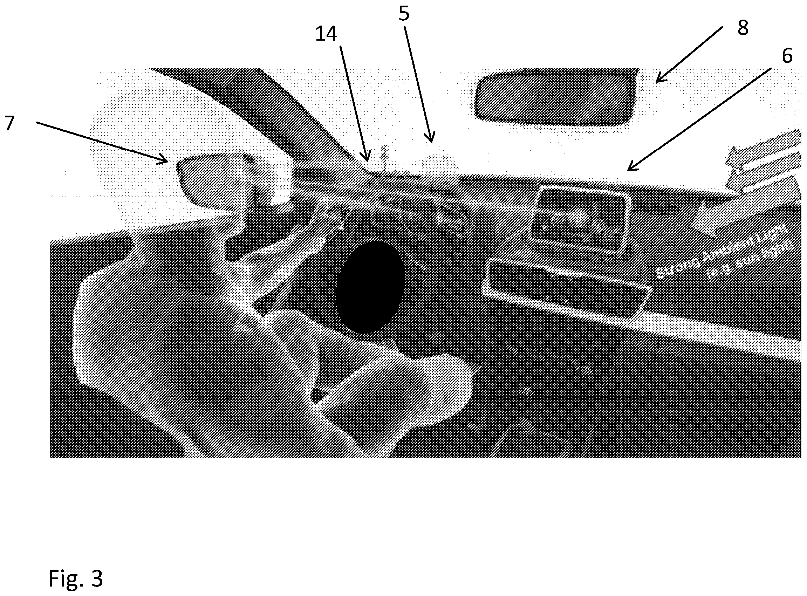

Fig. 3 shows a dashboard of a vehicle with several human-machine interfaces.

The human-machine interfaces of the dashboard comprise a side mirror 7, a rear mirror 7, a head-up display 5, an instrument cluster 14, and a secondary display 6. Thick arrows on the right hand side indicate a presence of a strong ambient light, which can be reflected form the displays and deteriorate the readability of the displays.

Small coordinate axes at the human machine interfaces shown in Fig. 3 indicate the position adjustability of the human-machine interface in order to improve the visual perception of the human-machine interface devices, in particular the readability of the displays.

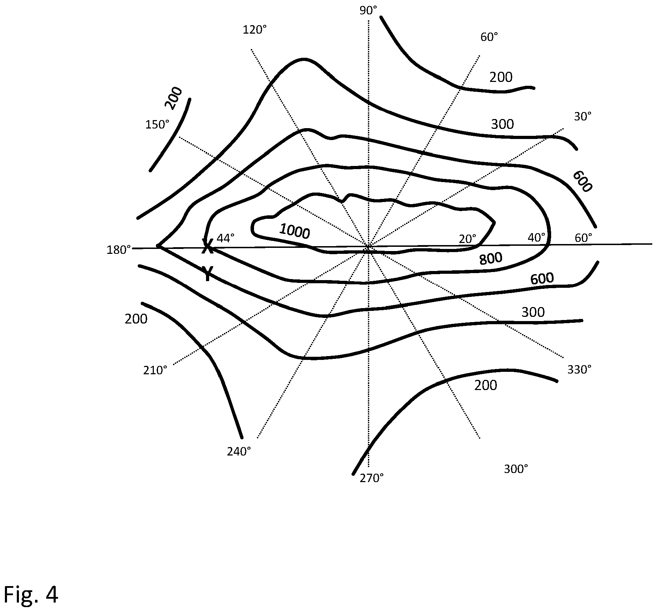

Fig. 4 shows an example of a contrast-viewing angle dependence of a display.

The contrast-viewing angle dependence is shown by means of iso-contrast lines in a radial diagram. The numbers with degree symbols at the ends of the radial axis show azimuthal angle. The numbers with the degree symbol on the horizontal axis, corresponding to azimuth angle of 180° or 0°, show viewing angles, i.e. deviation of the viewing direction from a direction perpendicular to the display plane. The numbers at the iso-contrast lines show the actual visual contrast perceptible by the user. According to the diagram, lower viewing angle results in higher contrast.

In the case when the driver face is in 0.7 m distance from the plane of the secondary display 6 which is in 1 m distance from the driver face, the viewing angle would be approximately 45°. If the azimuth angle is taken equal to 180°, corresponding to point X shown in the diagram of Fig. 4, the contrast ratio will be 800:1 which is lower than the contrast capabilities of the display.

If the secondary device is designed for a reference driver of height of 1.7 m, another driver, who is for instance 20 cm shorter, will result in a different azimuth angle (e.g. 191°), corresponding to point Y in the diagram. Thus, the contrast ratio would be lower at 600:1.

The adaptive positioning of human-machine interface devices based on the occupant detection according to the present application improves the display performance from the user's perspective by adjusting the positioning, in particular by tilting the display. In the above case, -11° tilting downwards and -10° towards the driver can improve the contrast ratio by 400:1 to 1000:1.

### REFERENCE NUMBERS

- 1: human-machine interface apparatus

- 2: camera
- 3: positioning device
- 4: controller
- 5: head-up-display
- 6: secondary display
- 7: side-view mirror
- 8: rear-view mirror
- 9: sunload sensor
- 10: user identification device
- 11: data storage device
- 12: smart glass window device
- 13: button
- 14: instrument cluster

- 41: processing unit
- 42: haptic input interface
- 43: camera interface
- 44: sunload sensor interface
- 45: user identification device interface
- 46: smart glass window interface
- 47: positioning device interface

- 50: method for operating a human-machine interface apparatus
- 100: start
- 105: verify whether new session
- 110: capture object using camera
- 115: face recognition step
- 120: retrieve preferences
- 125: verify whether adaptive mode
- 130: modify target position
- 140: modify target position based on preferences
- 150: verify the sunlight direction
- 155: verify whether strong reflection present
- 160: control smart glass to reduce light transmission
- 170: modify target position for lower reflection
- 180: positioning
- 200: end

## Claims

1. A controller (4) of a human-machine interface apparatus (5, 6, 7, 8) for a vehicle, the controller (4) comprising:
- a person position sensor interface (43) configured to receive a current person position information,
- the controller (4) being configured to generate a positioning device control signal for adjusting the position of a human-machine interface device (5, 6, 7, 8) in accordance with the information about the current person position information,
- a positioning device interface (47) configured to send out the control signal to a positioning device (3),
**characterized in that**
- the controller (4) further comprises an ambient light sensor interface (44) configured to receive a current ambient light information, and wherein a processing unit (41) of the controller (4) is further configured to generate the positioning device control signal for adjusting the position of the human-machine interface device (5, 6, 7, 8) in accordance with the current ambient light information, and **in that**
- the processing unit (41) is further is configured to send the positioning device control signal to the positioning device (3) for adjusting the position of the human-machine interface device (5, 6, 7, 8) in accordance with the person position information and in accordance with the contrast-viewing angle information only if the intensity or the illuminance of the ambient light on the sensor (9) exceeds a certain threshold value.

2. The controller according to claim 1, wherein
the processing unit (41) is further configured to generate a smart glass window control signal for adjusting light transmittance of a smart glass window (12), and wherein the controller (4) further comprises a smart glass window interface (46) for sending out the smart glass window control signal to the smart glass window device (12) for adjusting the transmittance of the smart glass window (12) in accordance with the current ambient light information

3. The controller according to claim 1, wherein
the controller (4) further comprises a user identification device interface (45) for receiving user identification information, and wherein the processing unit (41) is further configured to generate the positioning device control signal for positioning the human-machine interface device in accordance with the preferences of the identified user.

4. A human-machine interface apparatus (1) for a vehicle, the human-machine interface apparatus (1) comprising:
- a person position sensor (2) for providing a current person position information,
- at least one human-machine interface device (5, 6, 7, 8) for visual perception,
- the at least one human-machine interface device (5, 6, 7, 8) being a display with a specific pre-known contrast-viewing angle dependence
- a positioning device (3), for positioning the at least one human-machine interface device (5, 6, 7, 8),
- a controller (4) according to claim 1, wherein
- the human-machine interface apparatus (1) further comprises an ambient light sensor (9) for providing a current ambient light information.

5. The human-machine interface apparatus (1) according to claim 4, wherein the ambient light sensor (9) comprises a sunload sensor (9).

6. The human-machine interface apparatus (1) according to claim 4, wherein
the human-machine interface apparatus (1) further comprises a smart glass window device (12) and the controller (4) is further configured to send a smart glass window control signal to the smart glass window device (12) for adjusting the light transmittance of the smart glass window (12).

7. The human-machine interface apparatus (1) according to claim 4, wherein
the human-machine interface apparatus (1) further comprises a user identification device (10) for providing user identification information, and wherein the controller (4) is configured to identify the user, to retrieve pre-stored user profile information from a data storage device (11), and to send a control signal to the positioning device (3) for positioning the at least one human-machine interface device (5, 6, 7, 8) in accordance with the preferences of the identified user.

8. The human-machine interface apparatus according to claim 4, wherein the human-machine interface apparatus (1) further comprises a user action detector (13) for providing information about user commands and the controller (4) is further configured to send control signals to the positioning device for positioning the at least one human-machine interface device (5, 6, 7, 8) in accordance with the user commands.

9. A method for operating the human-machine interface apparatus (1) for a vehicle, the method comprising
- receiving a current person position information from a person position sensor (2) for determining the current position of persons in the vehicle,
- determining target position of a human-machine interface device (5, 6, 7, 8) in accordance with the current person position, and
- bringing the human-machine interface device (5, 6, 7, 8) in the target position,
**characterized by**
- determining a current ambient light information, and
- adjusting the position of the human-machine interface device (5, 6, 7, 8) in accordance with the current ambient light information,
- bringing the human-machine interface device (5, 6, 7, 8) in the target position only if the intensity or the illuminance of the ambient light exceeds a certain threshold value.

10. The method of claim 9, comprising adjusting a transmittance of a smart glass window (12) in accordance with the current ambient light information.

11. The method of claim 9, comprising
- identifying user based on a user identification information received from a user identification device (10),
- retrieving pre-stored personalized user profile information of the identified user, and
- adjusting the human-machine interface device (5, 6, 7, 8) position in accordance with the personalized user profile information

12. The method of claim 11, wherein
the user identification information is provided by a face recognition system.

## Patentansprüche

1. Steuereinheit (4) einer Mensch-Maschine-Schnittstellenvorrichtung (5, 6, 7, 8) für ein Fahrzeug, wobei die Steuereinheit (4) Folgendes aufweist:
- eine Personenpositionssensorschnittstelle (43), die ausgebildet ist, aktuelle Personenpositionsinformationen zu empfangen, wobei
- die Steuereinheit (4) ausgebildet ist, ein Positionierungseinrichtungssteuersignal zum Anpassen der Position einer Mensch-Maschine-Schnittstelleneinrichtung (5, 6, 7, 8) in Übereinstimmung mit den Informationen über die aktuellen Personenpositionsinformationen zu erzeugen, und
- eine Positionierungseinrichtungsschnittstelle (47), die ausgebildet ist, das Steuersignal zu einer Positionierungseinrichtung (3) auszusenden,
**dadurch gekennzeichnet, dass**
- die Steuereinheit (4) ferner eine Umgebungslichtsensorschnittstelle (44) aufweist, die ausgebildet ist, aktuelle Umgebungslichtinformationen zu empfangen, wobei eine Verarbeitungseinheit (41) der Steuereinheit (4) ferner ausgebildet ist, das Positionierungseinrichtungssteuersignal zum Anpassen der Position der Mensch-Maschine-Schnittstelleneinrichtung (5, 6, 7, 8) in Übereinstimmung mit den aktuellen Umgebungslichtinformationen zu erzeugen, und
- die Verarbeitungseinheit (41) ferner ausgebildet ist, das Positionierungseinrichtungssteuersignal zum Anpassen der Position der Mensch-Maschine-Schnittstelleneinrichtung (5, 6, 7, 8) in Übereinstimmung mit den Personenpositionsinformationen und in Übereinstimmung mit den Kontrastblickwinkelinformationen lediglich dann zur Positionierungseinrichtung (3) zu senden, wenn die Intensität oder die Beleuchtungsstärke des Umgebungslichts am Sensor (9) einen bestimmten Schwellenwert überschreitet.

2. Steuereinheit nach Anspruch 1, wobei
die Verarbeitungseinheit (41) ferner ausgebildet ist, ein Steuersignal für intelligente Glasfenster zum Anpassen einer Lichtdurchlässigkeit eines intelligenten Glasfensters (12) zu erzeugen, und die Steuereinheit (4) ferner eine Schnittstelle (46) für intelligente Glasfenster zum Aussenden des Steuersignals für intelligente Glasfenster zur Einrichtung (12) intelligenter Glasfenster zum Anpassen der Lichtdurchlässigkeit des intelligenten Glasfensters (12) in Übereinstimmung mit den aktuellen Umgebungslichtinformationen aufweisen.

3. Steuereinheit nach Anspruch 1, wobei
die Steuereinheit (4) ferner eine Anwenderidentifizierungseinrichtungs-Schnittstelle (45) zum Empfangen von Anwenderidentifizierungsinformationen aufweist und wobei die Verarbeitungseinheit (41) ferner ausgebildet ist, das Positionierungseinrichtungssteuersignal zum Positionieren der Mensch-Maschine-Schnittstelleneinrichtung in Übereinstimmung mit den Präferenzen des identifizierten Anwenders zu erzeugen.

4. Mensch-Maschine-Schnittstellenvorrichtung (1) für ein Fahrzeug, wobei die Mensch-Maschine-Schnittstellenvorrichtung (1) Folgendes aufweist:
- einen Personenpositionssensor (2) zum Bereitstellen aktueller Personenpositionsinformationen,
- mindestens eine Mensch-Maschine-Schnittstelleneinrichtung (5, 6, 7, 8) zur optischen Wahrnehmung, wobei
- die mindestens eine Mensch-Maschine-Schnittstelleneinrichtung (5, 6, 7, 8) eine Anzeigevorrichtung mit einer bestimmten vorab bekannten Kontrastblickwinkelabhängigkeit ist,
- eine Positionierungseinrichtung (3) zum Positionieren der mindestens einen Mensch-Maschine-Schnittstelleneinrichtung (5, 6, 7, 8) und
- eine Steuereinheit (4) nach Anspruch 1, wobei
- die Mensch-Maschine-Schnittstellenvorrichtung (1) ferner einen Umgebungslichtsensor (9) zum Bereitstellen aktueller Umgebungslichtinformationen aufweist.

5. Mensch-Maschine-Schnittstellenvorrichtung (1) nach Anspruch 4, wobei der Umgebungslichtsensor (9) einen Sonnenlastsensor (9) aufweist.

6. Mensch-Maschine-Schnittstellenvorrichtung (1) nach Anspruch 4, wobei die Mensch-Maschine-Schnittstellenvorrichtung (1) ferner eine Einrichtung (12) intelligenter Glasfenster aufweist und die Steuereinheit (4) ferner ausgebildet ist, ein Steuersignal für intelligente Glasfenster zum Anpassen der Lichtdurchlässigkeit des intelligenten Glasfensters (12) zur Einrichtung (12) intelligenter Glasfenster zu senden.

7. Mensch-Maschine-Schnittstellenvorrichtung (1) nach Anspruch 4, wobei die Mensch-Maschine-Schnittstellenvorrichtung (1) ferner eine Anwenderidentifizierungseinrichtung (10) zum Bereitstellen von Anwenderidentifizierungsinformationen aufweist und die Steuereinheit (4) ausgebildet ist, den Anwender zu identifizieren, im Voraus gespeicherte Anwenderprofilinformationen von einer Datenspeichereinrichtung (11) abzurufen und ein Steuersignal zum Positionieren der mindestens einen Mensch-Maschine-Schnittstelleneinrichtung (5, 6, 7, 8) in Übereinstimmung mit den Präferenzen des identifizierten Anwenders zur Positionierungseinrichtung (3) zu senden.

8. Mensch-Maschine-Schnittstellenvorrichtung nach Anspruch 4, wobei die Mensch-Maschine-Schnittstellenvorrichtung (1) ferner einen Anwenderaktionsdetektor (13) zum Bereitstellen von Informationen über Anwenderanweisungen aufweist und die Steuereinheit (4) ferner ausgebildet ist, Steuersignale zum Positionieren der mindestens einen Mensch-Maschine-Schnittstelleneinrichtung (5, 6, 7, 8) in Übereinstimmung mit den Anwenderanweisungen zur Positionierungseinrichtung zu senden.

9. Verfahren zum Betreiben der Mensch-Maschine-Schnittstellenvorrichtung (1) für ein Fahrzeug, wobei das Verfahren Folgendes aufweist:
- Empfangen aktueller Personenpositionsinformationen von einem Personenpositionssensor (2) zum Bestimmen der aktuellen Position von Personen im Fahrzeug,
- Bestimmen einer Zielposition einer Mensch-Maschine-Schnittstelleneinrichtung (5, 6, 7, 8) in Übereinstimmung mit der aktuellen Personenposition, und
- Bringen der Mensch-Maschine-Schnittstelleneinrichtung (5, 6, 7, 8) an die Zielposition,
**gekennzeichnet durch**
- Bestimmen aktueller Umgebungslichtinformationen,
- Anpassen der Position der Mensch-Maschine-Schnittstelleneinrichtung (5, 6, 7, 8) in Übereinstimmung mit den aktuellen Umgebungslichtinformationen und
- Bringen der Mensch-Maschine-Schnittstelleneinrichtung (5, 6, 7, 8) an die Zielposition lediglich dann, wenn die Intensität oder die Beleuchtungsstärke des Umgebungslichts einen bestimmten Schwellenwert überschreitet.

10. Verfahren nach Anspruch 9, das ein Anpassen einer Lichtdurchlässigkeit eines intelligenten Glasfensters (12) in Übereinstimmung mit den aktuellen Umgebungslichtinformationen aufweist.

11. Verfahren nach Anspruch 9, das Folgendes aufweist:
- Identifizieren eines Anwenders auf der Grundlage von Anwenderidentifizierungsinformationen, die von einer Anwenderidentifizierungseinrichtung (10) empfangen wurden,
- Abrufen im Voraus gespeicherter personalisierter Anwenderprofilinformationen des identifizierten Anwenders und
- Anpassen der Position einer Mensch-Maschine-Schnittstelleneinrichtung (5, 6, 7, 8) in Übereinstimmung mit den personalisierten Anwenderprofilinformationen.

12. Verfahren nach Anspruch 11, wobei
die Anwenderidentifizierungsinformationen durch ein Gesichtserkennungssystem bereitgestellt werden.

## Revendications

1. Contrôleur (4) d'un appareil d'interface homme-machine (5, 6, 7, 8) pour un véhicule, le contrôleur (4) comprenant :
- une interface de capteur de position de personne (43) configurée pour recevoir une information de position de personne actuelle,
- le contrôleur (4) étant configuré pour générer un signal de commande de dispositif de positionnement pour régler la position d'un dispositif d'interface homme-machine (5, 6, 7, 8) conformément à l'information sur l'information de position de personne actuelle,
- une interface de dispositif de positionnement (47) configurée pour envoyer le signal de commande à un dispositif de positionnement (3),
**caractérisé en ce que**
- le contrôleur (4) comprend en outre une interface de capteur de lumière ambiante (44) configurée pour recevoir une information de lumière ambiante actuelle, et une unité de traitement (41) du contrôleur (4) étant en outre configurée pour générer le signal de commande de dispositif de positionnement pour régler la position du dispositif d'interface homme-machine (5, 6, 7, 8) conformément à l'information de lumière ambiante actuelle, et **en ce que**
- l'unité de traitement (41) est en outre configurée pour envoyer le signal de commande de dispositif de positionnement au dispositif de positionnement (3) pour régler la position du dispositif d'interface homme-machine (5, 6, 7, 8) conformément à l'information de position de personne et conformément à l'information d'angle de visualisation de contraste seulement si l'intensité ou l'éclairement de la lumière ambiante sur le capteur (9) excède une certaine valeur seuil.

2. Contrôleur selon la revendication 1,
l'unité de traitement (41) étant en outre configurée pour générer un signal de commande de fenêtre à verre intelligent pour régler la transmittance lumineuse d'une fenêtre à verre intelligent (12), et le contrôleur (4) comprenant en outre une interface de fenêtre à verre intelligent (46) pour envoyer le signal de commande de fenêtre à verre intelligent au dispositif de fenêtre à verre intelligent (12) pour régler la transmittance de la fenêtre à verre intelligent (12) conformément à l'information de lumière ambiante actuelle.

3. Contrôleur selon la revendication 1,
le contrôleur (4) comprenant en outre une interface de dispositif d'identification utilisateur (45) pour recevoir des informations d'identification utilisateur, et l'unité de traitement (41) étant en outre configurée pour générer le signal de commande de dispositif de positionnement pour positionner le dispositif d'interface homme-machine conformément aux préférences de l'utilisateur identifié.

4. Appareil d'interface homme-machine (1) pour un véhicule, l'appareil d'interface homme-machine (1) comprenant :
- un capteur de position de personne (2) pour fournir une information de position de personne actuelle,
- au moins un dispositif d'interface homme-machine (5, 6, 7, 8) pour la perception visuelle,
- l'au moins un dispositif d'interface homme-machine (5, 6, 7, 8) étant affiché avec une dépendance d'angle de visualisation de contraste spécifique connue à l'avance,
- un dispositif de positionnement (3), pour positionner l'au moins un dispositif d'interface homme-machine (5, 6, 7, 8),
- un contrôleur (4) selon la revendication 1,
- l'appareil d'interface homme-machine (1) comprenant en outre un capteur de lumière ambiante (9) pour fournir une information de lumière ambiante actuelle.

5. Appareil d'interface homme-machine (1) selon la revendication 4, le capteur de lumière ambiante (9) comprenant un capteur d'ensoleillement (9).

6. Appareil d'interface homme-machine (1) selon la revendication 4,
l'appareil d'interface homme-machine (1) comprenant en outre un dispositif de fenêtre à verre intelligent (12) et le contrôleur (4) étant en outre configuré pour envoyer un signal de commande de fenêtre à verre intelligent au dispositif de fenêtre à verre intelligent (12) pour régler la transmittance lumineuse de la fenêtre à verre intelligent (12).

7. Appareil d'interface homme-machine (1) selon la revendication 4,
l'appareil d'interface homme-machine (1) comprenant en outre un dispositif d'identification utilisateur (10) pour fournir des informations d'identification utilisateur, et le contrôleur (4) étant configuré pour identifier l'utilisateur, pour récupérer des informations de profil utilisateur préenregistrées d'un dispositif d'enregistrement de données (11), et pour envoyer un signal de commande au dispositif de positionnement (3) pour positionner l'au moins un dispositif d'interface homme-machine (5, 6, 7, 8) conformément aux préférences de l'utilisateur identifié.

8. Appareil d'interface homme-machine selon la revendication 4,
l'appareil d'interface homme machine (1) comprenant en outre un détecteur d'action d'utilisateur (13) pour fournir des informations à propos de commandes utilisateur et le contrôleur (4) étant en outre configuré pour envoyer des signaux de commande au dispositif de positionnement pour positionner l'au moins un dispositif d'interface homme-machine (5, 6, 7, 8) conformément aux commandes utilisateur.

9. Procédé de fonctionnement de l'appareil d'interface homme-machine (1) pour le véhicule, le procédé comprenant
- la réception d'une information de position de personne actuelle depuis un capteur de position de personne (2) pour déterminer la position actuelle de personnes dans le véhicule,
- la détermination de la position cible d'un dispositif d'interface homme-machine (5, 6, 7, 8) conformément à la position de personne actuelle, et
- l'amenée du dispositif d'interface homme machine (5, 6, 7, 8) dans la position cible,
**caractérisé par**
- la détermination d'une information de lumière ambiante actuelle, et
- le réglage de la position du dispositif d'interface homme-machine (5, 6, 7, 8) conformément à l'information de lumière ambiante actuelle,
- l'amenée du dispositif d'interface homme-machine (5, 6, 7, 8) dans la position cible seulement si l'intensité ou l'éclairement de la lumière ambiante excède une certaine valeur seuil.

10. Procédé selon la revendication 9, comprenant le réglage d'une transmittance d'une fenêtre à verre intelligent (12) conformément à l'information de lumière ambiante actuelle.

11. Procédé selon la revendication 9, comprenant
- l'identification de l'utilisateur sur la base d'une information d'identification utilisateur reçue d'un dispositif d'identification utilisateur (10),
- la récupération d'informations de profil utilisateur personnalisé préenregistrées sur l'utilisateur identifié, et
- le réglage de la position du dispositif d'interface homme-machine (5, 6, 7, 8) conformément aux informations de profil utilisateur personnalisé.

12. Procédé selon la revendication 11,
l'information d'identification utilisateur étant fournie par un système de reconnaissance faciale.
